# EUROPEAN PATENT APPLICATION

(11) **EP 4 471 511 A1**
(43) Date of publication of application: **04.12.2024**
(21) Application number: 23176498.6
(22) Date of filing: 31.05.2023
(51) Int. Cl.: G05B 15/02

(54) **A COMPUTER-IMPLEMENTED METHOD AND PLATFORM FOR PLANNING AND OPERATING BUILDING EQUIPMENT**

(71) Applicant: Siemens Schweiz AG, 8047 Zürich (CH)
(72) Inventor: Fennibay, Dogan, 8006 Zürich (CH); Geyer, Uwe, 8810 Horgen (CH); Schlumberger, Andreas, 6340 Baar (CH)
(74) Representative: Siemens Patent Attorneys

(57) **Abstract**

A computer-implemented method and platform for planning and operating building equipment by processing a machine-readable provider and consumer model which describes data-points modelling a provision or consumption of data by functions and an exchange of data through connections with other data-points modelling a provision or consumption of data by devices of the building equipment.

## Description

The invention relates to a computer-implemented method and platform for planning and operating building equipment of a building with a thing based interaction working based on affected context and connection groups. The method can be applied in particular during the planning and/or commissioning phase of HVAC equipment in a building.

In the past during planning of building equipment mostly a manual mapping and binding of provided data-points for each instance has been performed. Further in a conventional platform mapping addresses have to be manually edited.

Interlinking of identifiers or unique names between consumers and producers is performed in conventional systems to some extent by use of discovery and instance id mapping. Further preconfigured typed applications with placeholders can be replaced by using auto replace during planning of building equipment.

A conventional KNX application and grouping architecture allows to bind functions to devices by mapping of group addresses. However the provided binding is covered only on the execution and instance level and is not communication technology independent.

Runtime models like OPC UA platforms cover some aspects of an interworking platform supporting multiple communication paradigms and technology stacks but do not provide a common model that describes how functions and devices do interwork with each other and that can be used also on a template basis.

In general conventional building equipment models target for operation and monitoring rather than engineering interworking. The planning and engineering effort for a building is high since a model which can be employed to automatically match functions and devices of building equipment is still missing.

Accordingly it is an object of the present invention to provide a method and platform which reduce significantly the planning and engineering efforts for planning and engineering building equipment of a building.

This object is achieved by a computer implemented method comprising the features of claim 1.

The invention provides according to a first aspect a computer-implemented method for planning and operating building equipment by processing a machine-readable provider and consumer model which describes data-points modelling a provision or consumption of data by functions and an exchange of data through connections with other data-points modelling a provision or consumption of data by devices of the building equipment.

In a possible embodiment of the computer-implemented method functions and devices of the machine-readable provider and consumer model are deployed during commissioning as instances to controllers of the building equipment.

In a possible embodiment of the computer-implemented method an associated connection group is linked to a function of the machine-readable provider and consumer model.

In a possible embodiment of the computer-implemented method a connection group linked to a function is calculated automatically during planning of the building equipment from a bounded context affected by the respective function.

In a possible embodiment of the computer-implemented the affected context of a function comprises a zone, a sub zone or a room of the building or an equipment type or a single device of the building equipment.

In a possible embodiment of the computer-implemented method a connection group linked to a function comprises a list of instance identifiers of device instances connected to the respective function.

In a possible embodiment of the computer-implemented method a connection group linked to a function is deployed during commissioning along with its associated function to a controller of the building equipment.

In a possible embodiment of the computer-implemented method each data-point of machine-readable provider and consumer model comprises a semantic name, a type and a protocol binding section.

In a possible embodiment of the computer-implemented method the functions are deployed as instances on edge controllers each comprising a runtime engine having an interaction layer used to read and write data-points of the machine-readable provider and consumer model.

In a possible embodiment of the computer-implemented method the deployed function instance is run as a program function on the runtime engine of the edge controller.

In a possible embodiment of the computer-implemented method the connection group linked to the function is evaluated during runtime when IO router calls are made to filter devices for the respective connection group.

In a possible embodiment of the computer-implemented method the machine-readable provider and consumer model is read from a data storage or database.

In a possible embodiment of the computer-implemented method the devices of the building equipment comprise peripheral devices, in particular HVAC devices including sensor devices providing data and actuator devices consuming data.

In a possible embodiment of the computer-implemented method a common semantic naming model is used to address functions, function instances, function instance data-points and to address devices, device instances and device instance data points.

The invention further provides a computer-implemented platform for planning and operating building equipment of a building comprising a processor adapted to process a stored machine-readable provider and consumer model which describes data-points modelling a provision or consumption of data by functions and an exchange of data through connections with other data-points modelling a provision or consumption of data by devices of the building equipment.

In the following possible embodiments of the different aspects of the present invention are described in more detail with reference to the enclosed figures.
Fig.1 shows schematically a building site for illustrating the operation of a computer-implemented method according to the present invention;
Fig.2 illustrates the connection between a function instance and a device instance as employed by an embodiment of the computer-implemented method according to the present invention;
Fig.3 illustrates the deployment of devices, functions and connection groups on an edge controller of an automation system as employed by an embodiment of the computer-implemented method according to the present invention;
Fig.4 illustrates the interworking between devices, functions and connection groups as employed by an embodiment of the computer-implemented method according to the present invention;
Fig.5 illustrates the connection of data-points between interfaces of function and device instances as employed by an embodiment of the computer-implemented method according to the present invention;
Fig.6 illustrates the interworking between an edge device and a peripheral device through an IO router as employed by an embodiment of the computer-implemented method according to the present invention.

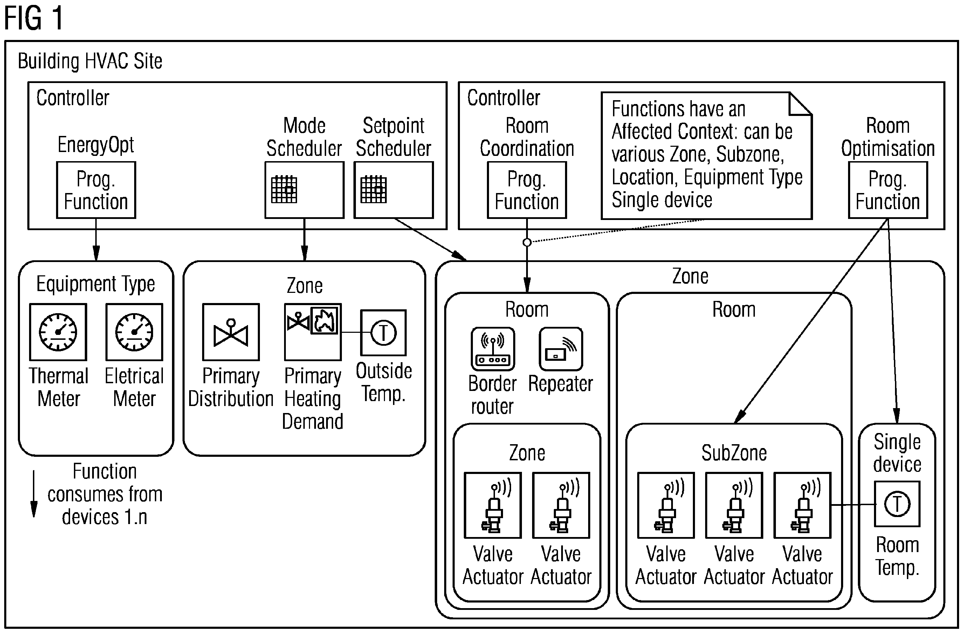

As shown in Fig.1 heating, ventilation, and air conditioning equipment (HVAC) is in installed at a building site (HVAC). Different technologies can be used to control e.g. a temperature, humidity, and purity of the air in an enclosed space of the building. The installed HVAC equipment can be planned to provide thermal comfort and acceptable indoor air quality to persons within the respective building. HVAC system design is a sub-discipline of mechanical engineering, based on the principles of thermodynamics, fluid mechanics, and heat transfer. The components of the HVAC devices can during planning and commissioning be optimally matched so that an operator of the building or facility does profit not only from minimized installation and operating costs, but also from a high level of security against failures

The HVAC equipment installed in a building site as illustrated schematically in Fig.1 can form part of residential structures such as single family homes, apartment buildings, hotels, and senior living facilities; medium to large industrial and office buildings such as skyscrapers and hospitals; vehicles such as cars, trains, airplanes, ships and submarines; and in marine environments, where safe and healthy building conditions are regulated with respect to temperature and humidity, using fresh air from outdoors.

The three major tasks fulfilled by the HVAC equipment, i.e. heating, ventilation, and air conditioning are interrelated, especially with the need to provide thermal comfort and acceptable indoor air quality within reasonable installation, operation, and maintenance costs. HVAC systems can be used in both domestic and commercial environments. HVAC systems can provide ventilation, and maintain pressure relationships between spaces. The means of air delivery and air removal from spaces is referred to as room air distribution. In modern buildings, the design, installation, and control of peripheral devices performing these tasks are integrated into one or more HVAC systems. Although HVAC is executed in individual buildings or other enclosed spaces, the equipment involved can in some cases form an extension of a larger district heating (DH) or district cooling (DC) network, or a combined DHC network.

To apply energy efficiency monitoring and optimizing systems for heating, ventilation and air conditioning (HVAC) systems can comprise metadata of system components and devices that can be extracted automatically and stored in a machine-readable way. The integration of computers and microprocessors into HVAC equipment allows facility managers of the building facility access to an almost unlimited stream of data. Facility managers have access to system and equipment data, such as supply and return temperatures, occupancy schedules, and in some cases, metered energy use. Analyzing the available data can give facility managers a better understanding of the operation of their HVAC equipment, in particular how different hardware and software components of the HVAC equipment interact with each other, and how different factors may influence a performance and efficiency of the HVAC equipment. Sensors and metering devices connected to the system together with installed software can provide a fair amount of information to facility managers.

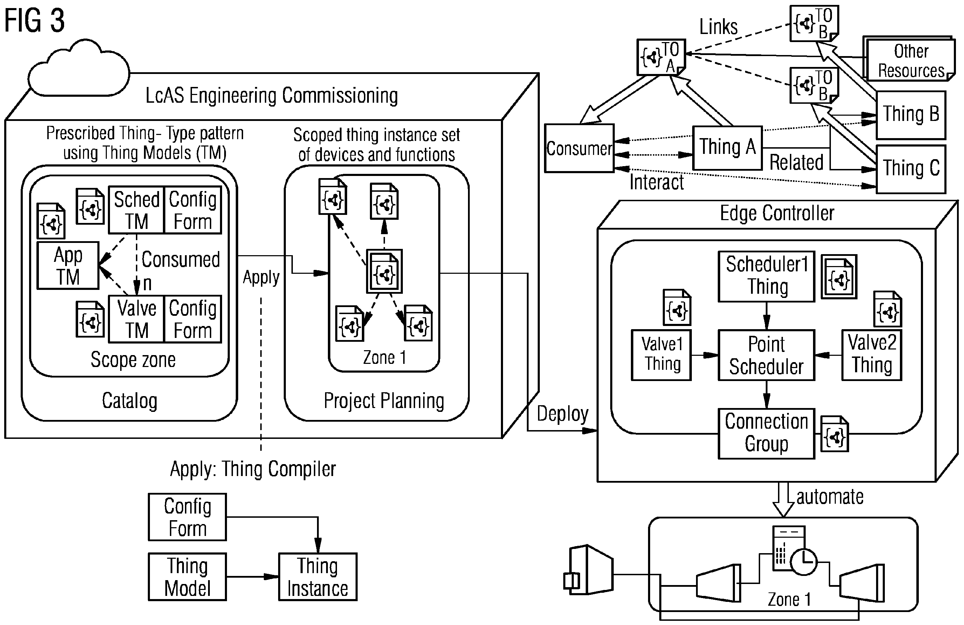

The invention provides a computer-implemented method for planning and operating building equipment, in particular HVAC equipment, as illustrated schematically in the example of Fig.1. The method does process a machine-readable provider and consumer model read from a storage or database. The machine-readable provider and consumer model describes datapoints modelling a provision or consumption of data by functions and an exchange of data through connections with other data-points modelling a provision or consumption of data by devices of the building equipment. Functions and devices of the machine-readable provider and consumer model can be deployed during commissioning as instances to controllers of the building equipment as illustrated in Fig.3.

In building automation the building equipment can be controlled and automated by use of flexible application functions running on programmable controllers that interact with sensors, actuators and other building equipment devices. The building devices can comprise HVAC devices.

By providing and processing the machine readable provider and consumer model the function can interact with peripheral devices and other functions in a way that the planning and engineering effort becomes minimal. Moreover the machine readable provider and consumer model is independent of the underlying communication technology stack (e.g. IO, fieldbus, http, CoAP etc.).

By processing the machine readable provider and consumer model devices (mostly exposing data-points) and functions (exposing and consuming data-points) can be configured and interconnected in various combinations and bounded contexts.

Further by processing the machine readable provider and consumer model devices and functions can be verified on different levels such as for catalog libraries (type based), site specific project planning (instance based) and in the programmable controller at runtime (execution based). Functions as illustrated in Fig.1 can interact with peripheral devices over various communication media. Often, they are interconnected via different communication media (e.g. field buses).The functions can consume data received from devices such as sensor devices or meter devices. The functions can also send data to devices such as actuators. Functions have an affected context. For example a room coordination function has a room within the building as context bound o the function as shown in Fig.1.

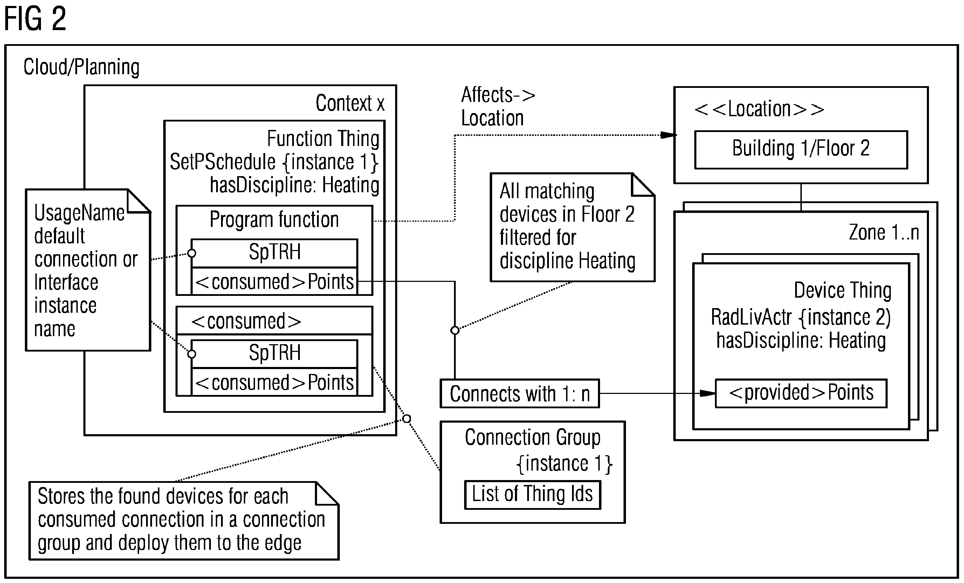

In a possible embodiment of the computer -implemented method of the present invention an associated connection group is linked automatically to a function of the machine-readable provider and consumer model as also shown in Fig.2.The connection group linked to a function is calculated during planning of the building equipment from a bounded context affected by the respective function. The affected context of a function comprises for instance a zone, a sub zone or a room of the building or an equipment type or a single device of the building equipment as also illustrated in Fig.1. A connection group linked to a function comprises in a preferred embodiment a list of instance identifiers of device instances connected to the respective function. The connection group linked to a function can be deployed during commissioning along with its associated function to a controller of the building equipment. Each data-point of the machine-readable provider and consumer model can comprises a semantic name, a type and a protocol binding section.

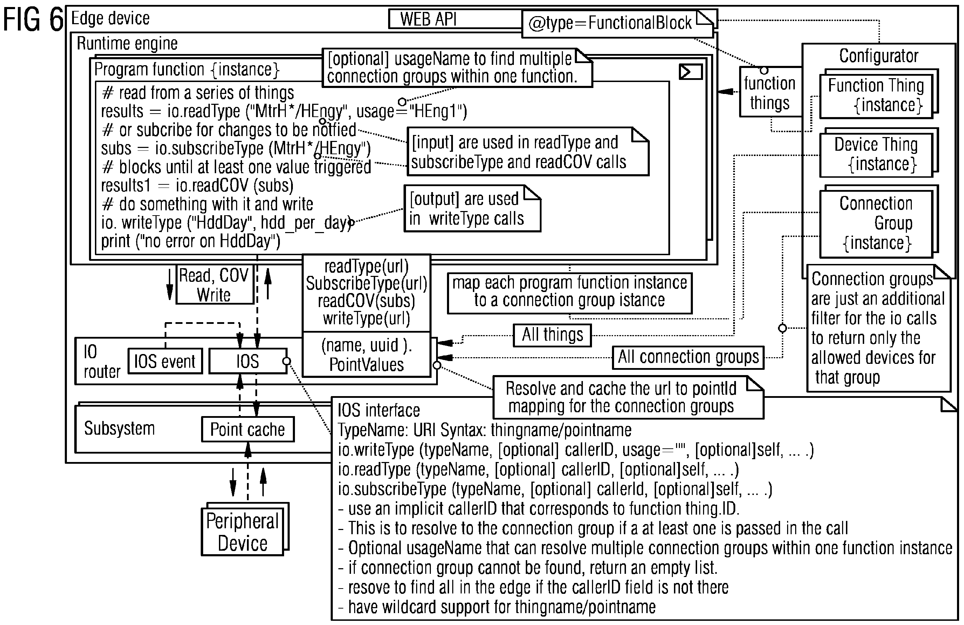

The functions can be deployed as instances on edge controllers each comprising a runtime engine having an interaction layer used to read and write data-points of the machine-readable provider and consumer model as shown in Fig.6.The deployed function instance is run as a program function on the runtime engine of the edge controller. The connection group linked to the function is evaluated during runtime when IO router calls are made to filter devices for the respective connection group. The devices of the building equipment comprise peripheral devices as shown in Fig.6, in particular HVAC devices including sensor devices providing data and actuator devices consuming data.

In a preferred embodiment a common semantic naming model is used to address functions, function instances, function instance data-points and to address devices, device instances and device instance data points.

A computer-implemented platform can be used for planning and operating building equipment of a building comprising a processor adapted to process a stored machine-readable provider and consumer model which describes data-points modelling a provision or consumption of data by functions and an exchange of data through connections with other datapoints modelling a provision or consumption of data by devices of the building equipment. The platform can comprise a provider model with semantic enrichment of W3C thing descriptions and thing models .A module classification between devices (as e.g. data providers) and functions (as e.g. data consumers) can be provided. A type/instance model can be implemented for catalog / project / controller runtime. Further a runtime engine with a communication technology independent interaction layer to read and write arbitrary data-points can be employed. In a preferred embodiment a common semantic naming model is used on all levels, from type to instance and runtime engine interface to address devices or functions. The platform can comprise a consumer model to generically describe what data-points of functions (as clients) really consume data from devices, other functions or event abstract interfaces. Connection Groups can be used for group calculation (during planning) and group name resolving (at controller runtime).

A provider and consumer model of functions and devices and their interactions can be loaded from a storage or database. For the model the W3C thing description can be taken as base.

In the following an example of a function having a provider model with semantic enrichment for the function classification and also a consumer model is given:

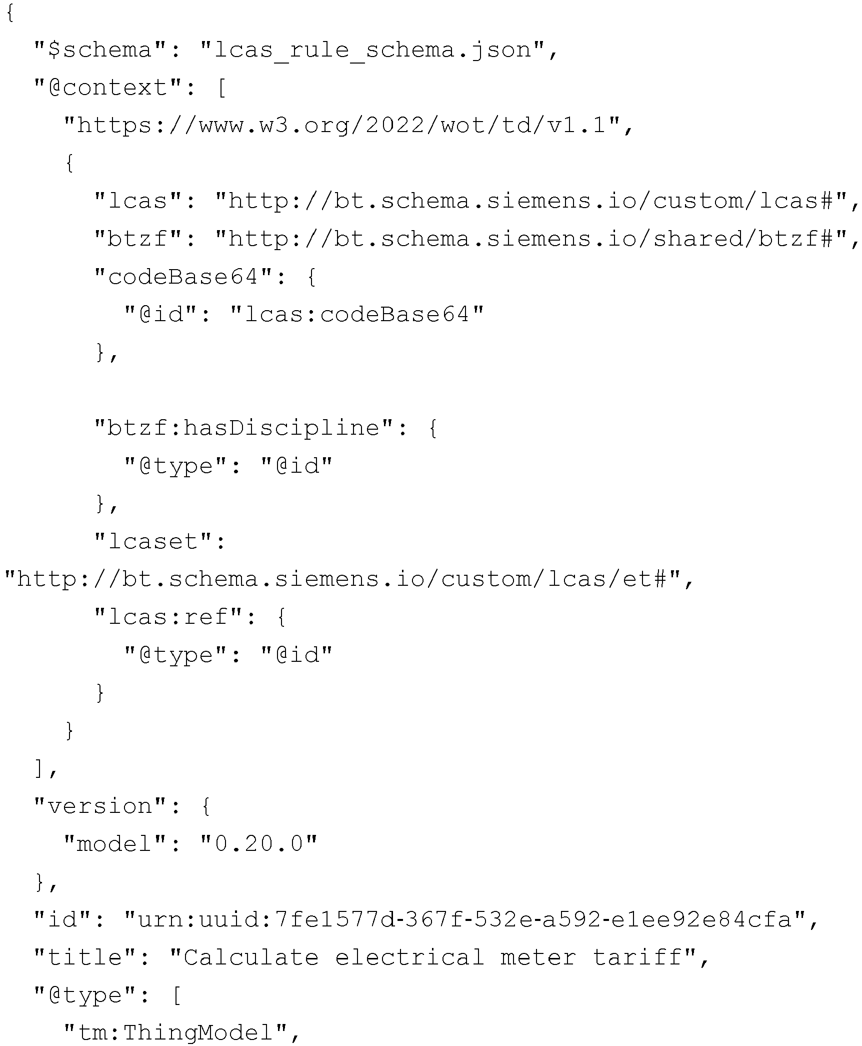

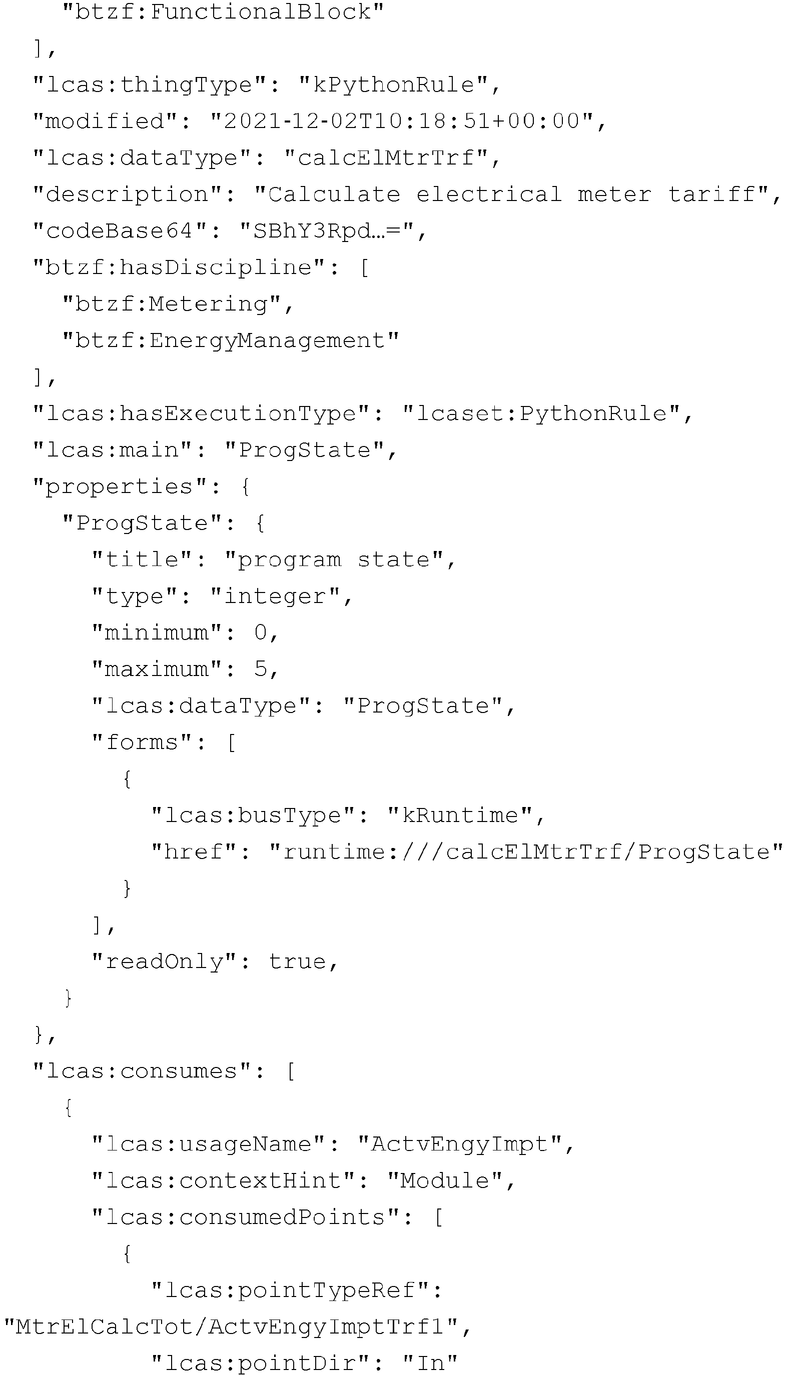

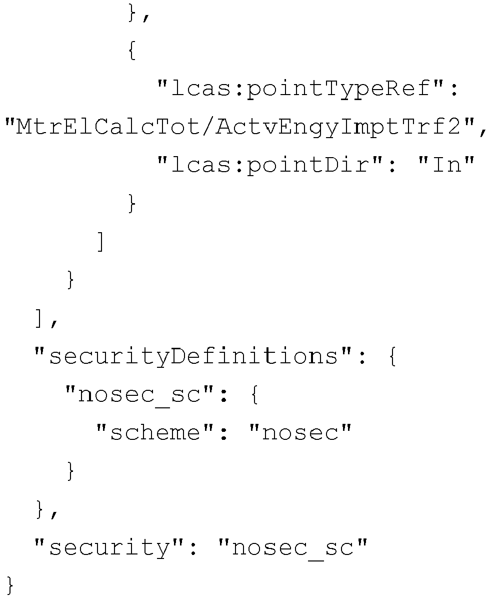

A module classification between devices (typically data providers) and functions (typically data consumers) can be performed. Devices are typically representatives of external attached equipment's or controllers .Thing descriptions may describe how to reach and talk to them. Functions are entities that do something with it (hence function). Functions typically interact or exchange data (read/write or interact in general) with devices through reading/writing data-points. Therefore devices provide data-points (exposed as W3C things with properties). Functions mostly consume data received at data-points (consumed point), however functions can also be data providers.

Fig.2 shows an example of using thing instances during project planning. The bounded context is a location/zone 1..n. The connection group which groups the thing ids that match the consumer provider connection is linked to the function as result of a matching algorithm.

A type/instance model for catalog / project / controller runtime can be implemented.

At a Catalog Level (Type pattern) devices and functions can in a possible embodiment be provided as a specific type and kept in a catalog as a library element. A Thing model can be used here.

For example a heating application can use a scheduler and a series of valves that implement the data-points needed for the scheduler interface. E.g., a set point for temperature heating (SpTRH)

In a possible embodiment the provider and consumer model is used to make validity checks if a function within the same application can interact with the associated devices.

At a Project Level: (Instance Level during planning) of the HVAC project the HVAC entities (i.e. the equipment's, devices and functions they interact with) are placed as digital wins in the customer projects to represent real world items (e.g. Scheduler1 affects Valves 1..20 in a Heating zone1).

The provider and consumer model can be used to make validity checks to find if all provider instances match the consumer. The provider and consumer model can further be processed to find the correct peers and calculate the connection groups according to its bounded context.

At a controller Runtime Level: (Instance Level during commissioning) devices and functions (as thing instances) and connection groups are deployed to the edge controller for automation interaction with the real hardware as illustrated in Fig.3.

The provider and consumer model can be processed to find the connection groups associated to the usage name with a function and to filter the connected peers according the allowed list of thing in the connection group.

A runtime engine can comprise a communication technology independent interaction layer to read and write arbitrary data-points. An edge controller has a runtime that supports the interworking with things either on a generic level for functions or concrete devices using the protocol binding in thing descriptions. In this way functions are decoupled from the real device's communication technology.

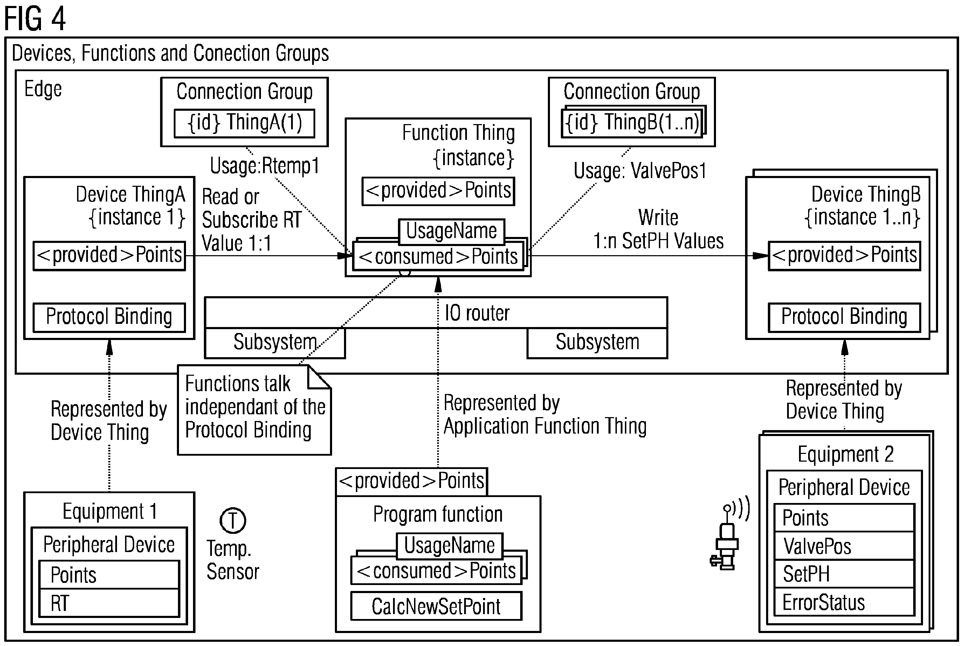

For example as illustrated in Fig. 4 a device A is connected via Modbus protocol binding whereas device B is connected via CoAP protocol binding. The function(s) that devices A,B interact with are unaware of the different technologies. The bridge with the generic interface is provided by the runtime IO router interface.

A common semantic naming model can be applied on all levels, from type to instance and runtime engine interface to address devices or function.Semantic names are used to classify the meaning of a device or function and all datapoints and give them a stable name.Naming is used in the matching algorithm to find the peers for the consumed data-points.This is done by using stable and unique names that conform to semantic models.

The things or instances of devices or functions can use a description of thing level (calcElMtrTrf) and also for each datapoint (ProgState). This can be done using lcas:datatype or @type.

```
 {
 "title": "Calculate electrical meter tariff",
 "@type": [
 "tm:ThingModel",
 "btzf:FunctionalBlock"
 ],
 "lcas:dataType": "calcElMtrTrf",
 ...
 "properties": {
 "ProgState": {
 "title": "program state",
 "@type": "lcasdt:ProgState",
 OR
 "lcas:dataType": "ProgState",
 }
 },
 ...
 }
```

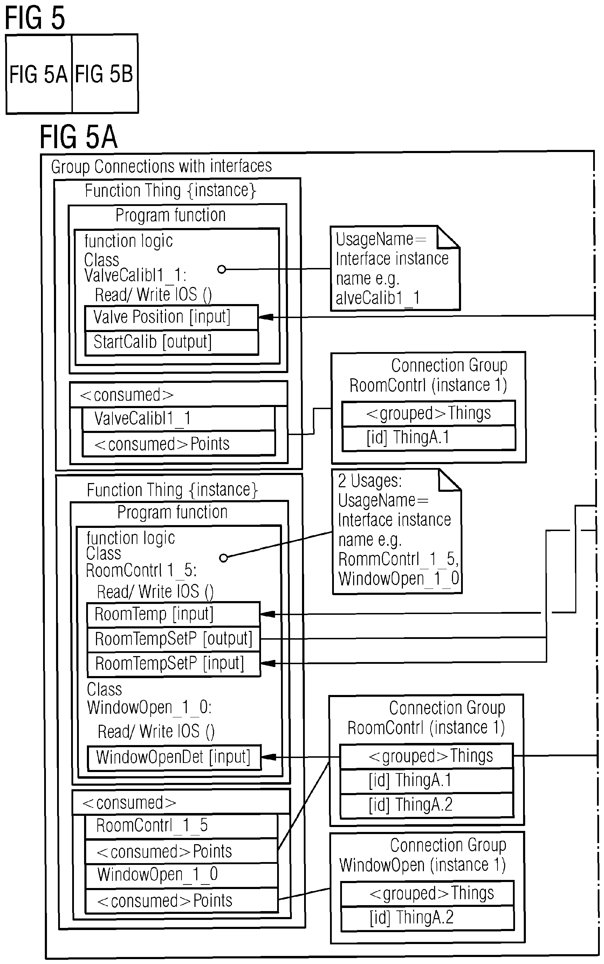

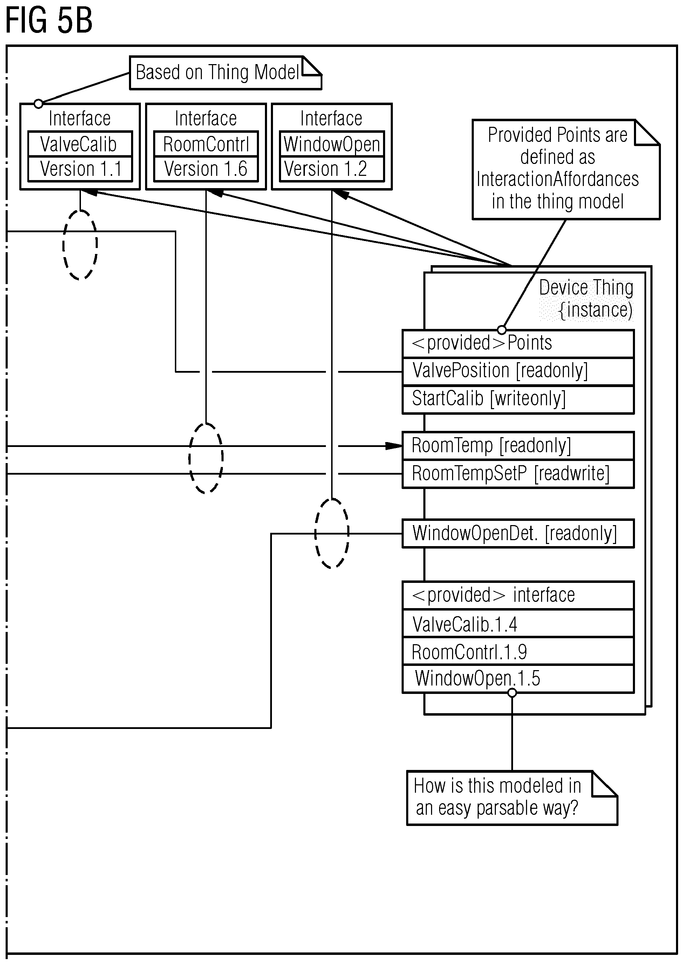

The provider and consumer model is employed to generically describe what datapoints functions (as clients) really consume data from devices as also illustrated in Fig.5.

The provider model contains a generic description of datapoints implemented in a description that represents peripheral devices and/or functions.A W3C Thing model can be used for this. Each datapoint is given a stable semantic name, a data-schema (type of the datapoint, read-only, writeonly etc.) and a protocol binding section where settings are described how to interact with that datapoint in the device (containing URL's and other bus related parameters.). The provider model of a specific device can be implemented in relation to an interface contract using the same description mechanism to enforce a common representation.

The consumer model contains in a preferred embodiment a generic description how datapoints in a thing or instance are used within the function it is programmed against.The consumer model conforms also against what interface and version the datapoints are implemented. The model also works without interfaces by directly referencing the device datapoints. This provides some tighter coupling but releases the burden to maintain interfaces for every use case (e.g. configuration or calibration functions).

An advantage acchieved hereby is to allow to make checks and calculate the interworking with function device instances independently from its implementation and to allow abstraction and separation of concern and governance.

The calculation of connection groups is performed during planning of the building equipment and group name resolving is done during controller runtime.Connection groups are calculated in the bounded context during planning. The connection groups are linked to the functions The connection groups are then deployed and updated during commissioning along with the functions.The connection groups are evaluated during runtime when IO router interface calls are made to filter devices for that connection group as also illustrated in Fig.6.The interface of the IO router and how functions program it, and how the runtimes resolve calls to its connection groups, can be seen in Fig.6 as well.

The computer-implemted method according to the present invention does process one machine-readable model that describes consumer and provider interactions for type, instance, and runtime environments. The method does focus on datapoint exchange as this is the prominent building block in the building application domain. In W3C thing description datapoints can be modeled using properties (simple read/write) or actions (RPC style).

Functions can be held generically (type based) and no change in source code or ID replacement is needed. Making connections between functions and devices instances can be simplified without the need to add them individually during planning/commissioning.Name to Id resolution can be done to each bounded context on planning and runtime level.

The method makes use of a provider and consumer model for types and instances. The provider model specifies what things/instances and datapoints are exposed (W3C Thing Description) and how they can be reached (protocol binding). In addition the provider model can use abstract interface definitions to enforce a specific contract when (multiple) datapoints need to implemented in different device or function types.

The consumer model specifies a generic model for the client side what datapoints are really consumed within a function without exposing its real implementation. The functions can be implemented in different programming languages and paradigms. (block-programming, line programming, configuration behavior etc.).

Consumes.usageName specifies the instance name used within a functions. If multiple are used, multiple connection groups are needed.

Consumes.contextHint gives a hint to the planning application how the bounded context can be scoped.

Consumes.min/maxCardinality tells how many peers are expected within the functions for that particular usage name. Default is unlimited. 0..n .

Consumes.consumedPoints lists contains the (thing)/datapoint names that are really used within a function and the direction how it was used.

Consumes.consumedInterface references the interface and the particular version that the client consumed the datapoints from.

```
 "lcas:consumes": [
    {
      "lcas:usageName": "ActvEngyImpt",
      "lcas:contextHint": "Zone",
      "lcas:minimumCardinality": 1,
      "lcas:consumedInterface": "dxif:calcElEngyTot/1.0"
      "lcas:consumedPoints": [
        {
          "lcas:pointTypeRef":
 "MtrElMsrdTot/ActvEngyImptTrf1",
          "lcas:pointDir": "In"
        },
        {
          "lcas:pointTypeRef":
 "MtrElMsrdTot/ActvEngyImptTrf2",
          "lcas:pointDir": "In"
        }
      ]
    },
    {
      "lcas:usageName": "MainAlarm",
      "lcas:contextHint": "Zone",
      "lcas:minimumCardinality": 1,
      "lcas:maximumCardinality": 1,
      "lcas:consumedPoints": [
        {
          "lcas:pointTypeRef": "MtrElMsrdTot/MainAlarm",
          "lcas:pointDir": "Out"
        }
      ]
    }
  ],
```

Datapoint/Interface matching is performed within a bounded context and connection group filtering is done during runtime.

At catalog level the interworking in the function and device catalog can be checked. The bounded context comprises an application type that aggregates interworking of functions and devices.The boundedContext: application-type_aggregate for each function func with a "consumes" section in the boundedContext. For each "consume" element in func["consumes"] it is checked if all the consume.consumedPoints exist in all things.providedPoints found in the boundedContext and it is checked if the consume.consumedInterface version matches the implemented interface in the things found in the bounded_context.

Point signature checks including type and direction (consumer In/Out matches provider read/writeOnly) can be performed. If all checks succeed the function successfully references other devices/functions in the same application- type_aggregate.

At planning level interworking in planning with instances is checked. The boundedContext: heating zones1..n can be selected by the user, and/or can be auto-selected by a discipline filter.For each function within the bounded context and for each function func with a "consumes" section in the bounded context an empty connection group is added for each consumer with usageName as key to the function.For each "consume" element in func ["consumes"] it is checked if all the consume.consumedPoints exist in all thing.providedPoints found in the bounded context and it is checked if the consume.consumedInterface version matches the implemented interface in the things found in the bounded_context. This includes direction checks consumer In/Out matches provider read/writeOnly). Point signature checks including type and direction (consumer In/Out matches provider read/writeOnly) can be performed and a list of all things that match the checks is generated.The list is updated in the associated connection group.

For connection group filtering during runtime for each usageName of a function the corresponding connection group and filter results in writeType or readType calls to all elements are found.

The machine-readable provider and consumer model can in a possible embodiment be edited by an engineer by means of a graphical user interface GUI. The machine-readable provider and consumer model can be customized for a specific building and stored in a database of the platform. The machine-readable provider and consumer model can provide simulation results during planning of the building equipment. Functions and devices of an optimized machine-readable provider and consumer model can be deployed during commissioning as instances on controllers, in particular on edge controllers, of the building equipment.

## Claims

1. A computer-implemented method for planning and operating building equipment by processing a machine-readable provider and consumer model which describes data-points modelling a provision or consumption of data by functions and an exchange of data through connections with other data-points modelling a provision or consumption of data by devices of the building equipment.

2. The computer-implemented method according to claim 1 wherein functions and devices of the machine-readable provider and consumer model are deployed during commissioning as instances to controllers of the building equipment.

3. The computer-implemented method according to claim 1or 2 wherein an associated connection group is linked to a function of the machine-readable provider and consumer model.

4. The computer-implemented method according to claim 3 wherein a connection group linked to a function is calculated during planning of the building equipment from a bounded context affected by the respective function.

5. The computer-implemented method according to claim 4 wherein the affected context of a function comprises a zone, a sub zone or a room of the building or an equipment type or a single device of the building equipment.

6. The computer-implemented method according to claim 4 wherein a connection group linked to a function comprises a list of instance identifiers of device instances connected to the respective function.

7. The computer-implemented method according to claim 5 wherein a connection group linked to a function is deployed during commissioning along with its associated function to a controller of the building equipment.

8. The computer-implemented method according to any of the preceding claims 1 to 7 wherein each data-point of machine-readable provider and consumer model comprises a semantic name, a type and a protocol binding section.

9. The computer-implemented method according to any of the preceding claims 2 to 8 wherein the functions are deployed as instances on edge controllers each comprising a runtime engine having an interaction layer used to read and write data-points of the machine-readable provider and consumer model.

10. The computer-implemented method according to claim 9 wherein the deployed function instance is run as a program function on the runtime engine of the edge controller.

11. The computer-implemented method according to claim 10 wherein the connection group linked to the function is evaluated during runtime when IO router calls are made to filter devices for the respective connection group.

12. The computer-implemented method according to any of the preceding claims 1 to 11 wherein the machine-readable provider and consumer model is read from a data storage or database.

13. The computer-implemented method according to any of the preceding claims 1 to 12 wherein the devices of the building equipment comprise peripheral devices, in particular HVAC devices, including sensor devices providing data and actuator devices consuming data.

14. The computer-implemented method according to any of the preceding claims 1 to 13 wherein a common semantic naming model is used to address functions, function instances, function instance data-points and to address devices, device instances and device instance data points.

15. A computer-implemented platform for planning and operating building equipment of a building comprising a processor adapted to process a stored machine-readable provider and consumer model which describes data-points modelling a provision or consumption of data by functions and an exchange of data through connections with other data-points modelling a provision or consumption of data by devices of the building equipment.
